Europäisches Patentamt

European Patent Office

Office européen des brevets

(11) Publication number: **0 204 044**

A1

# EUROPEAN PATENT APPLICATION

(21) Application number: 85303989.9

(22) Date of filing: 05.06.85

(51) Int. Cl.⁴: **B 60 J 11/00**

(43) Date of publication of application:
10.12.86 Bulletin 86/50

(84) Designated Contracting States:
BE DE FR GB IT SE

(71) Applicant: **Ou, Jan-Chou**
**4th Floor No. 12, Alley 4, Lane 155 Pa Te Road Sec. 3**
**Taipei(TW)**

(72) Inventor: **Ou, Jan-Chou**
**4th Floor No. 12, Alley 4, Lane 155 Pa Te Road Sec. 3**
**Taipei(TW)**

(74) Representative: **Higgins, Michael Roger et al,**
**Marks & Clerk 57/60 Lincoln's Inn Fields**
**London WC2A 3LS(GB)**

(54) An extensible roof structure for automobile.

(57) The structure is mounted on the roof of a motor vehicle and comprises an enclosure (3) and two panels (1,2) supported by the enclosure for slidable movement in opposite directions parallel to the longitudinal extent of the motor vehicle. Power operated means, which may comprise a D.C. electric motor (63) operated from the motor vehicle battery and one or more flexible elements or belts (5,41), is provided to move the two panels from retracted position within the enclosure to extended positions (as shown) in which they project from front and rear ends of the enclosure and over the front and rear windscreens of the vehicle.

· FIG. 1

EP 0 204 044 A1

- 1 -

AN EXTENSIBLE ROOF STRUCTURE FOR AUTOMOBILE

This invention relates to an automobile roof structure, and particularly, to an extensible roof structure for an automobile.

There is a commonly encountered problem when parking a car in the outdoor area under hot summer sun; the temperature within the car goes up very soon; seats, dashboard and steering wheel quickly become hot and scorching, which make people who enter the car sweat instantly, and it is not a pleasant experience to the driver and passengers.

On the other hand, to have a car parking in the outdoor area in snowy winter has another sort of problem, i.e., the falling snow or sleet piles up and covers the windshield and rear window. The driver has to scrape and clear the windshield and rear window before driving.

Those problems and the needs to make improvement have been recognized long ago. Many different proposals have been explored over years to address those concerns, however, none of them was very effective or widely adopted. The common drawback of those proposals was that they tried to solve the problem, only partially, yet created many other problems or negative side effects which make them not justified or practical.

For example, U.S. Pat. No. 4,229,035 to Newman disclosed a vehicle windshield rain deflector system which employed hydraulic pump to actuate a pair of hydraulic cylinders to move a rain deflector in front of windshield. It can only cover a small portion of windshield area against head-on falling rain, little use if wind blows in side direction; furthermore, the always presenting rain deflector in front of windshield becomes an annoying hindrance to the vision of the driver. Most drivers would rather have a clear and unobstructive front view during driving. The always presenting shadow from the rain deflector on windshield would become another annoying drawback when the driver or front seat passenger wants to enjoy sunshine in the morning or afternoon when the sunshine is not very hot.

Similarly, U.S. Pat. No. 3,379,467 to Brush disclosed a windshield visor which featured permanent visor panel to cover whole windshield area. The driver's view is significantly confined. While it can prevent high noon sun glaring, it also deprives the driver from enjoying sunshine when it is not very intense in the morning or afternoon.

U.S. Pat. No. 3,297,356 to Francis disclosed an automobile windshield rain visor featuring removable tubular member attached to car top by means of vacuum cap or magnet. It must be installed or removed manually every time it is used, and moreover, it is quite bulky and inconvenient, either to use or to store. None of aforesaid proposals has been widely accepted in the market place.

In order to solve the foregoing problems, there is a number of products being marketed, though none of them is very effective yet. It always happens that those products which can reduce sun heat transmitting into car cannot however prevent snow from falling onto it.

For example, some devices provide internally mounting sun shade on the car window, which is either curtain or shutter type. Some others provide external mounting sun visor which is, in general, a narrow strip or plate fixed transversely on the front edge of car roof and extended over windshield, and which can only cover a small portion of windshield area and, as it is fixed and extended in the front direction, it will increase the drag force aerodynamically when the car is moving forward thereby increasing fuel consumption. Still others provide fixed shutter-type louvered shade panel mounting externally on the rear window, which has no effect on windshield, but has the drawback of partially blocking the rearview of the driver. As to the canvas car cover which is so clumsy to unpack and spread over the car and so easy to collect dusts and dirts, it is not widely used.

As to the movable car roof, there are many different types available which relate to sun roof feature. However, sun roof feature is for the purpose of receiving sunshine into car, and not for providing sun shade or snow shield to windshield and rear window; furthermore, sun roof feature mostly confines the motion of roof panel between windshield and rear window, not to extend over windshield and rear window area.

4

It is an object of the invention to provide a structure which can be operated to provide an improved sun shade or snow shield for the front and rear windscreens of a motor vehicle.

According to the invention, there is provided an extensible roof structure for a motor vehicle, comprising support mounted on or adapted to be mounted on the roof of the motor vehicle, two panels carried by the support for slidable movement relative thereto in a direction which in use corresponds to the longitudinal extent of the motor vehicle, and power operated means for moving the two panels from retracted positions to extended positions in which the panels project from the front and rear ends, respectively, of the support and in use over front and rear windscreens of the motor vehicle.

Preferred and/or optional features of the invention are set forth in claims 2-21.

In one embodiment, a metal sheet roof enclosure is mounted to cover the car top having a hollow space formed thereinside. The roof enclosure has two parallel and longitudinal side frames, each provided with a front and a rear end openings disposed transversely therein. A front roof panel and a rear roof panel are sandwiched in the parallel side frames of the roof enclosure,

and can slide out of the roof enclosure through the front and rear end openings respectively. A power actuating mechanism is provided for moving the front and rear roof panels, which includes sprockets pivotally installed at each opening end at both side frames and above the front and rear roof panels. A cogged belt is wound around the two sprockets at front and rear ends of each side of roof enclosure. Thus, the two sides of each cogged belt can make linear motions in opposite direction concurrently between the two sprockets at the front and rear ends. On one side of the cogged belt, there is attached a clamp which grips a stub pin on the inner side of the front roof panel; on the opposite side of same cogged belt another clamp is attached to grip a stud pin on the inner side of the rear roof panel.

Wound around the two sprockets at the rear end, there is provided a power cogged belt which is further engaged in the middle to a power sprocket with two tensioners. The power sprocket is attached to a reducing gear that engages a worm gear, which is in turn driven by a reversible D.C. motor. The D.C. motor connects to car battery via a two-way switch.

When the two-way switch is turned on, the D.C. motor, and the power sprocket rotate and drive the power cogged belt, which in turn drives the two sprockets at the rear end. Then, the cogged belts at both sides of roof enclosure move concurrently and, as the the clamps attached on the cogged belts grip both sides of the front and rear roof panels, drive the latters out of the roof enclosure concurrently.

The front and rear roof panels being partially moved out of the roof enclosure, and extended and hanged above windshield and rear window respectively, can serve as a sun shade or snow shield for car.  The hollow space between the roof enclosure and the car top can serve as an additional heat barrier to sun heat radiated toward car.

Upon throwing the two-way switch to other way to reverse the rotating direction of the D.C. motor, the power sprocket and power cogged belt will move in reversed direction, so also will be the cogged belts at both sides and the clamps thereupon.  Thus the front and rear roof panels will be retracted into the roof enclosure for stowage so as to reduce the drag force in terms of aerodynamics, when the car is moving forward.

The extensible roof structure may be a self-contained unit and in being so, it can be produced separately and independently, and can be mounted and fixed on car top when necessary.  The two-way switch may be connected with the car battery with a plug via cigarette lighter on the dashboard of the car.

The extensible roof structure could be a portable unit with the roof enclosure.  In this case attached to the outside of both side frames,——————————————————————————

there is a multiple number of fasteners for use in gripping the drain gutters at both sides of car top; thus, roof enclosure can be held firmly on the car top. Upon loosing the fasteners, the roof enclosure can be removed from the car top for off season storage.

In addition to front and rear end openings through which front and rear roof panels can be extended and hung over windshield and rear window, two side openings at the roof enclosures and two side roof panels, may be provided. The side roof panels can be slid out of roof enclosure and hung over both side windows to serve as sun shade and snow shield so as to provide more coverage and shelter for a car.

The roof structure may also ——————————— provide flexible installation whereby the roof enclosure is attached on conventional car roof carrier rack, the latter being adjustable transversely according to the size of car top and having both end fasteners to grip the drain gutter on both sides of car top and hold the roof enclosure firmly on car top.

The invention will now be more particularly described, by way of example, with reference to the accompanying drawings in which:

FIG. 1 is a schematic and perspective view of an embodiment of an extensible roof in accordance with the invention, being set up in use;

FIG. 2 is a close-up perspective view of the embodiment of the extensible roof  shown in FIG. 1;

FIG. 3 is a schematic top view of the embodiment of the extensible roof according to the invention;

FIG. 4 is a fragmentary cutaway view of the embodiment of the extensible roof according to the invention;

FIG. 5 is a schematic top view of another embodiment of the extensible roof according to the invention, with drive shaft in close-up view;

FIG. 6 is a schematic top view of a further embodiment of the extensible roof according to the invention;

FIG. 7 is a schematic side view of the embodiment of the extensible roof shown in FIG. 6;

FIG. 8 is a fragmentary cutaway view of the embodiment of the extensible roof according to the invention shown in FIG. 6;

FIG. 9 is a schematic top view of a still another embodiment of the extensible roof according to the invention, with hollow cylinder in close-up view;

FIG. 10 is a fragmentary schematic view of an embodiment of roof panel according to the invention ;

FIG. 11 is a schematic and perspective view of an alternative embodiment of the extensible roof in accordance with the invention being set up in use;  and

FIG. 12 is a schematic top view of the embodiment of the extensible roof according to the invention.

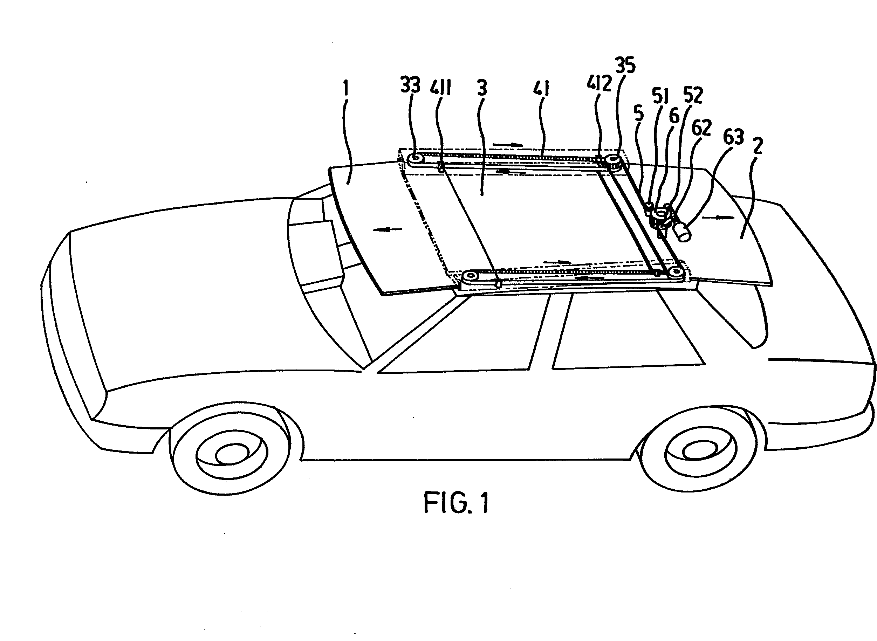

Referring to FIGS.1, 2, 3 and 4, there is shown in different views of an embodiment of an extensible roof in accordance to the present invention, which comprises three portions of components being the roof enclosure 3, a front roof panel 1 and a rear roof panel 2, a power actuating mechanism constituting a reversible D.C. motor 63 which drives a worm gear 62 being in turn in engagement with a reducing gear 61 having a power sprocket 6 attached thereto on the same shaft, a power cogged belt 5, side cogged belts 41, 42 and the side sprockets 33, 35, 34, 36. D.C. motor 63 is mounted firmly on roof enclosure 3, and is connected with car battery via a two-way switch (not shown). Roof enclosure 3 is preferably formed by sheet metal (steel or aluminum alloy), and a hollow space is formed underneath when mounting on the car top; the roof enclosure 3 has transverse opening at front end and rear end, and has two longitudinal and parallel side frames 31, 311 which have E-shaped cross section channels at both front and rear ends, and with the center extended flanges pointing toward inside of the hollow space. Roof enclosure 3 can be fixed permanently on the car top by welding or screw and bolt, or can be made portable and removable from car top by installing a plurality of fasteners 37, 371, 372 on each side of side frame for gripping the drain gutter on each side of the car top to hold the roof enclosure 3 firmly when in use.  By loosening these fasteners 37, 371, 372,
roof enclosure 3 can be removed from car top for off season
storage.  A further alternative is to attach roof enclosure
3 on roof carrier rack 374 by screw 376.  Roof carrier rack
374 is provided at the end thereof with fastener 377 having
screw 378 to grip the drain gutter on the car top to hold
the roof enclosure 3 firmly.  Sleeve 375 allows roof carrier
rack 374 make transverse adjustment to fit different size
of car top.  Roof panels 1 and 2 are sandwiched in the
parallel side frames 31 and 311 at the lower channel of
E-shaped cross section and are slidable out of the front
and rear opening ends respectively.

A sprocket is pivotally installed on the upper channel
of E-shaped cross section at each end of side frames 31,
311;  the sprockets 33, 35 are on one side, while sprockets
34, 36 are on the other side.  A cogged belt 41 is wound
around sprockets 33, 35 on one side, and another cogged
belt 42 is wound around sprockets 34, 36 on the other side;
thus, the two sides of each cogged belt 41 (or 42) can have
linear motion in opposite directions between the two sprockets
33, 35 (or 34, 36) at both ends.

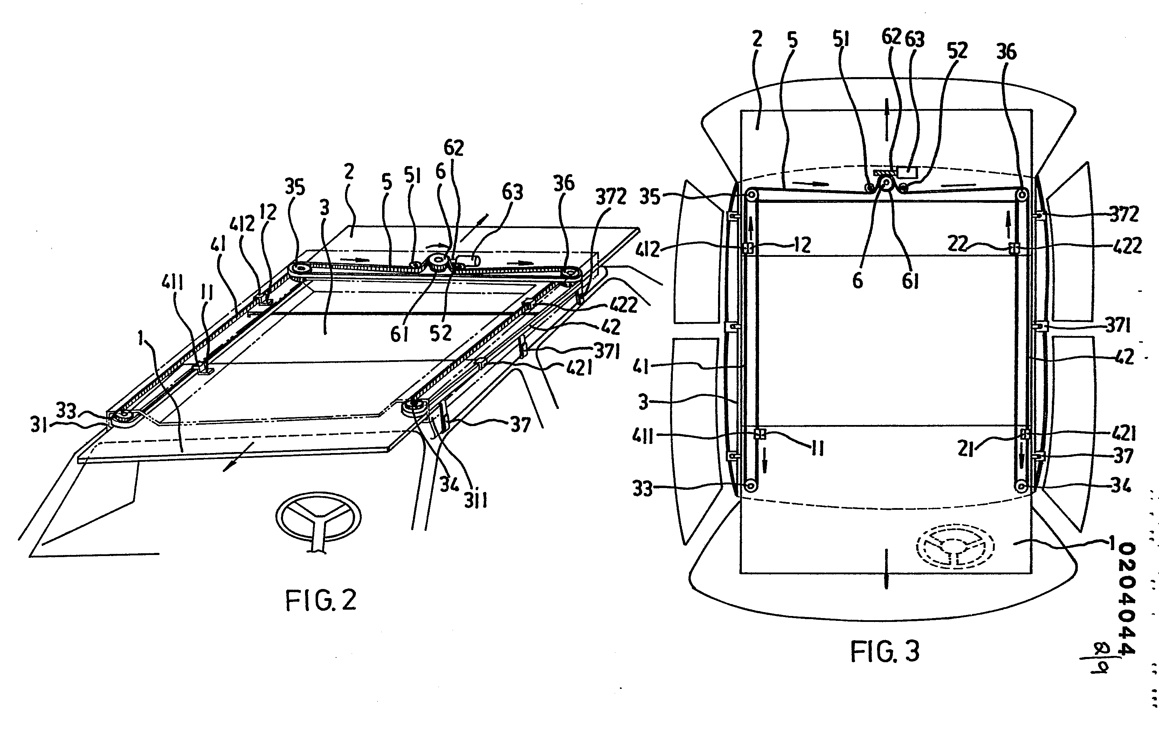

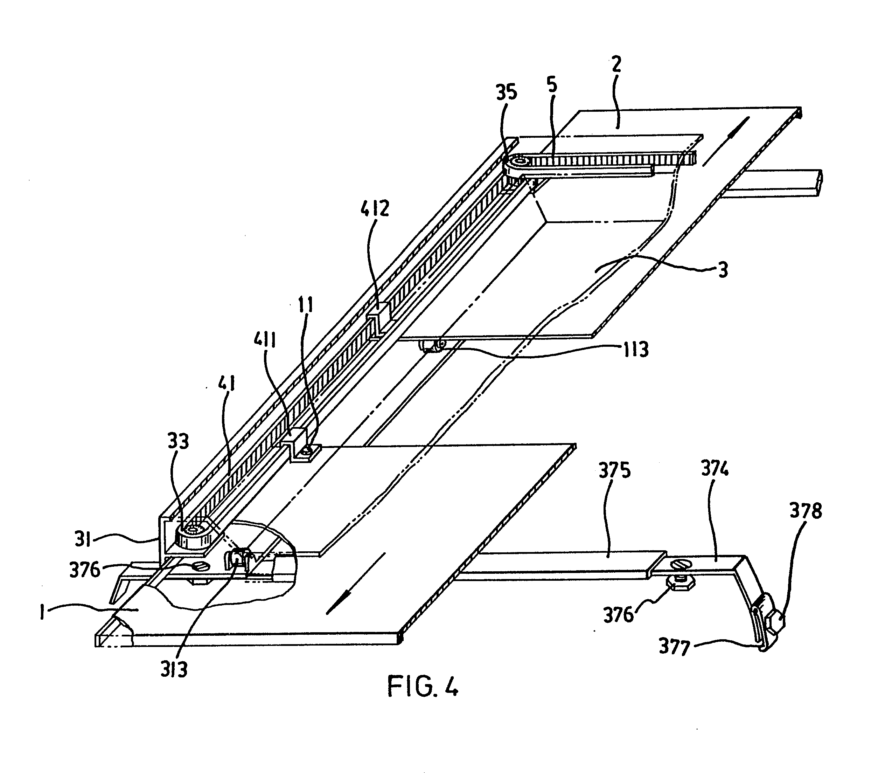

Referring to FIG. 4, on one side of cogged belt 41,
there is a clamp 411 being attached and gripped to a stud
pin 11 which is fixed on inner side of the front roof panel 1;
the opposite side of cogged belt 41 also has a clamp 412
being attached and gripped to a stud pin 12 on the inner side of rear roof panel 2. Returning to FIGS. 2, 3 again, on cogged belt 42, there is a clamp 421 to grip a stud pin 21 on front roof panel 1, and a further clamp 422 to grip a stud pin 22 on rear roof panel 2; thereby, when the sprockets at both sides turn in the same direction, the cogged belts and the clamps thereupon will grip the front and rear roof panels 1, 2 at both sides, and move front and rear roof panels 1, 2 in longitudinal direction concurrently.

Wound around the sprockets 35, 36 at the rear end, there is provided a power cogged belt 5 which is further engaged to a power sprocket 6 in the middle by two tensioners 51,52. As mentioned above, the power sprocket 6 is attached to the reducing gear 61, thereby, when two-way switch is thrown to one side, D.C. motor 63 will rotate to drive worm gear 62 and to turn the reducing gear 61 and the power sprocket 6, which moves power cogged belt 5. The power cogged belt 5, in turn, rotates sprockets 35 and 36 simultaneously, and the cogged belts 41, 42 at both sides will also be driven concurrently; the clamps 411, 421 thereupon will move the front roof panel 1 forward and out of roof enclosure 3, while clamps 412, 422 drive the rear roof panel 2 rearward and out of the roof enclosure 3 at the same time. The front roof panel 1 with its inner sides being sandwiched between the both side frames 31, 311 of the roof enclosure 3, will now have its front portion extended out and hung above the windshield of the car to serve as sun shade or snow shield for windshield. Likewise, rear roof panel 2 will be hung over rear window in the mean time to serve as sun shield for rear window.

By throwing the two-way switch on the other side, the D.C. motor 63 will rotate in reversed direction, so does the power sprocket 6, which in turn drives the power cogged belt 5 in revesed direction, and makes sprockets 35, 36 rotate in reversed direction as well. Thus the cogged belts 41, 42 and the clamps thereupon will drive front roof panel 1 and rear roof panel 2 back into roof enclosure 3 for stowage again so as to reduce the air drag force when the car moves forward. If necessary, the enclosure 3 may be removed from the car top for off season storage, thereby reducing the weight of car and fuel consumption as well.

In addition to the roof panels 1, 2, which can be extended out of the roof enclosure 3 to block sun beam from reaching windshield and rear window for reducing temperature within the car, the hollow space formed between roof enclosure 3 and car top can also serve as an additional barrier of heat transmission from sun, since air is a poor heat conductor. Thus, the temperature within the car can be further reduced when parking in the outdoor area under the summer sun.

When using the roof panels 1, 2 as snow shield in snowy winter, the extended roof panels can be retracted into the roof enclosure 3 or remain in the extended position when car is in motion, and when the road condition is slippery and car speed is relatively slow, as the air drag force is not heavy anyway.

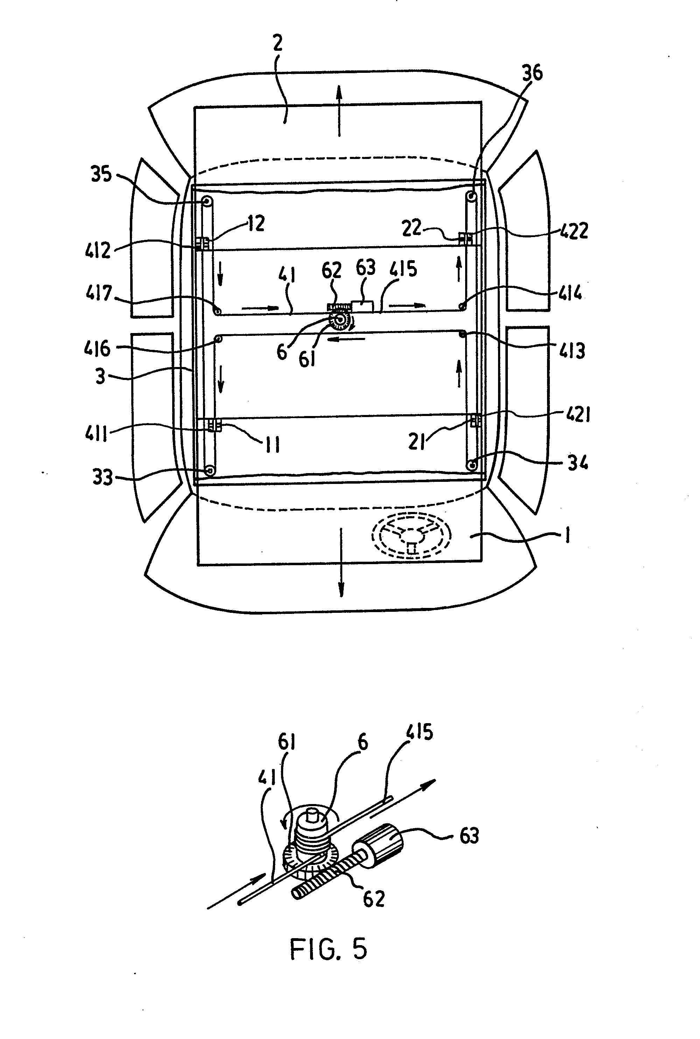

FIG. 5 illustrates another embodiment of the present invention. Like in the embodiment shown in FIGS. 1-4, front roof panel 1 and rear roof panel 2 are slidable in roof enclosure 3, the main difference being in the power actuating mechanism. Pulleys 33, 35, 34, 36 are provided at both ends of each side of the roof enclosure 3, and they are pivotally installed above front and rear panels 1, 2. A driving cord 41 is wound around the two pulleys 33, 35 on one side; then, one of the cord end 41 is further wound around an idler 417 in the middle of that side and tied to a drive shaft 6 in the middle of roof enclosure 3. Drive shaft 6 is fixed on a reducing gear 61 which engages a worm gear 62 and is driven by a reversible D.C. motor 63 mounted in the center of roof enclosure 3. The other end of driving cord 41 is wound around another idler 416 in the middle of same side, then goes to the other side of roof enclosure 3 and winds around another idler 413, pulleys 34, 36 at both ends, and via another idler 414 in the middle finally reaches drive shaft 6 where driving cord 41 winds around a number of turns and is then tied therto as indicated by FIG. 5.

Attached to the driving cord 41 at both sides there are clamps 411, 421 which grip stud pins 11 and 21 respectively at both sides of inner side of front roof panel 1; likewise, there are clamps 412, 422 attached to the driving cord 41, which grip stud pins 12, 22 at both sides of rear roof panel 2.

when a two-way switch (not shown) is turned on, the D.C. motor 63 will rotate in the direction as indicated in FIG. 5; that is, the driving cord at end 41 becomes take-up side, being wound on drive shaft 6. At the same time, the driving cord at end 415 becomes the releasing side to unwind from drive shaft 6, and thus, the driving cord at clamps 411, 421 moves simultaneously forward and grips front roof panel 1 at both sides thereby moving the latter forward and out of roof enclosure 3. Similarly, the driving cord at clamps 412, 422 grips rear roof panel 2 at both sides and moves the latter rearward and out of roof enclosure 3. The front and rear roof panels 1, 2 being moved out and hung over windshield and rear window can serve as sun shade or snow shield.

Upon throwing the two-way switch to reverse position so as to have the D.C. motor 63 rotated reversely, the driving cord end 41 becomes releasing and unwinding end while driving cord end 415 becomes take-up and winding end. Both the front and rear roof panels 1, 2 will then be retracted into the roof enclosure 3 for stowage.

This embodiment looks somewhat like the conventional sun-roof feature, however, there are differences in their function and characteristics.        Sun-roof feature is to receive sun shine into car, the roof panel motion is limited within car top area.  The present invention is to prevent sunshine and snow from reaching windshield and rear window, and for this purpose, the roof panels are extended out side of car top area when in use

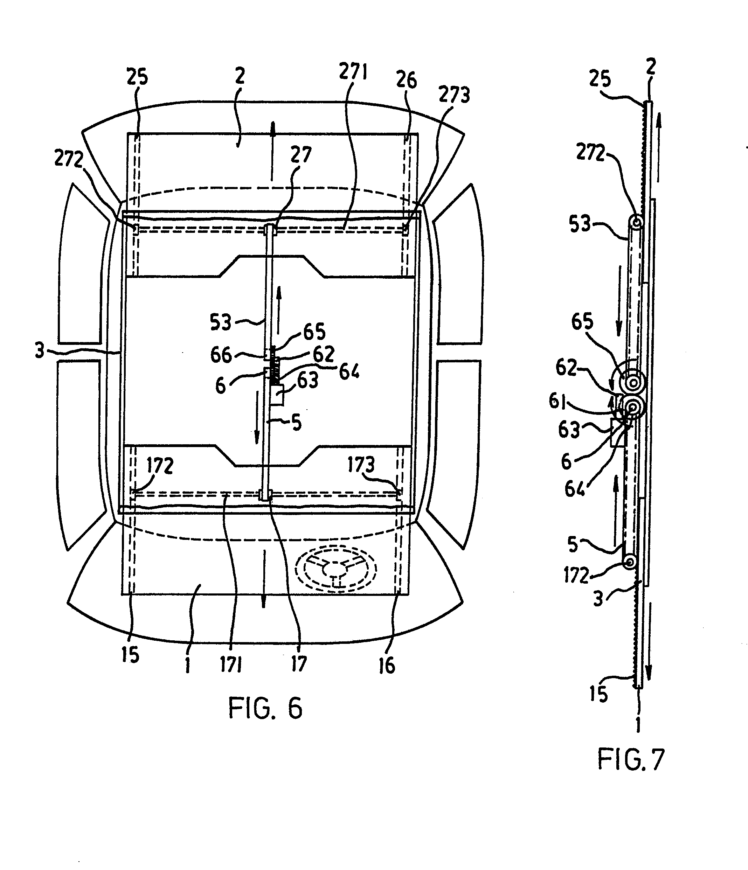

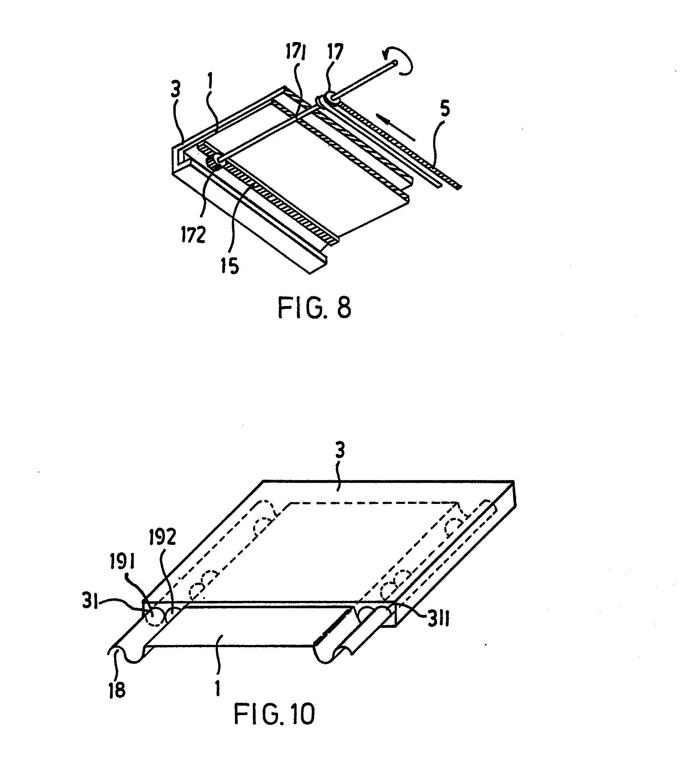

FIGS.6, 7, 8 illustrate a further embodiment of the present invention.  Front roof panel 1 and rear roof panel 2 are slidable in roof enclosure 3 in a similar way as in the embodiment shown in FIGS.1-4, the main difference being the power actuating mechanism.  In the center of roof enclosure 3, a reversible D.C. motor.63 is mounted to drive a worm gear 62 which, in turn, engages a reducing gear 61. On the shaft of reducing gear 61, a front gear 64 and a front power sprocket 6 are mounted.  The front gear 64 engages with a rear gear 65 on a rear shaft, on which a rear power sprocket 66 is mounted.  A front cogged belt 5 is wound around the front power sprocket 6 and a front end sprocket 17 which is installed in the middle of the front end of roof enclosure 3 and is under front roof panel 1.  A front spindle 171 extends horizontally and tranversely across front end sprocket 17, and is provided with pinions 172, 173 attached at both ends.  Pinions 172, 173 are engaged with the gear racks 15, 16, which are longitudinally disposed underneath the two sides of front roof panel 1.  Likewise, there is a rear cogged belt 53 wound around the rear power sprocket 66 and a rear end sprocket 27, and a rear spindle 271 which has pinions 272, 273 at both ends engaged with gear racks 25, 26 longitudinally disposed underneath rear roof panel 2.

When a two-way switch (not shown) is turned on, D.C. motor 63 will rotate to drive the front gear 64, and rear gear 65 will rotate in opposite direction. Therefore, the front power sprocket 6 and the rear power sprocket 66 will be rotated in opposite directions. Through the cogged belts 5, 53, front end sprocket 17 and rear end sprocket 27 will be turned in opposite directions simultaneously, so do the pinions 172, 173 and 272, 273 attached thereto. The gear racks 15, 16 will then be moved forward, while the gear racks 25, 26 will be moved rearward simultaneously. The front roof panel 1 and rear roof panel 2 will be moved out of roof enclosure 3 accordingly.

By throwing the two-way switch on the other side to reverse the rotating direction of D.C. motor 63, the front roof panel 1 and the rear roof panel 2 can be retracted into roof enclosure 3 for stowage.

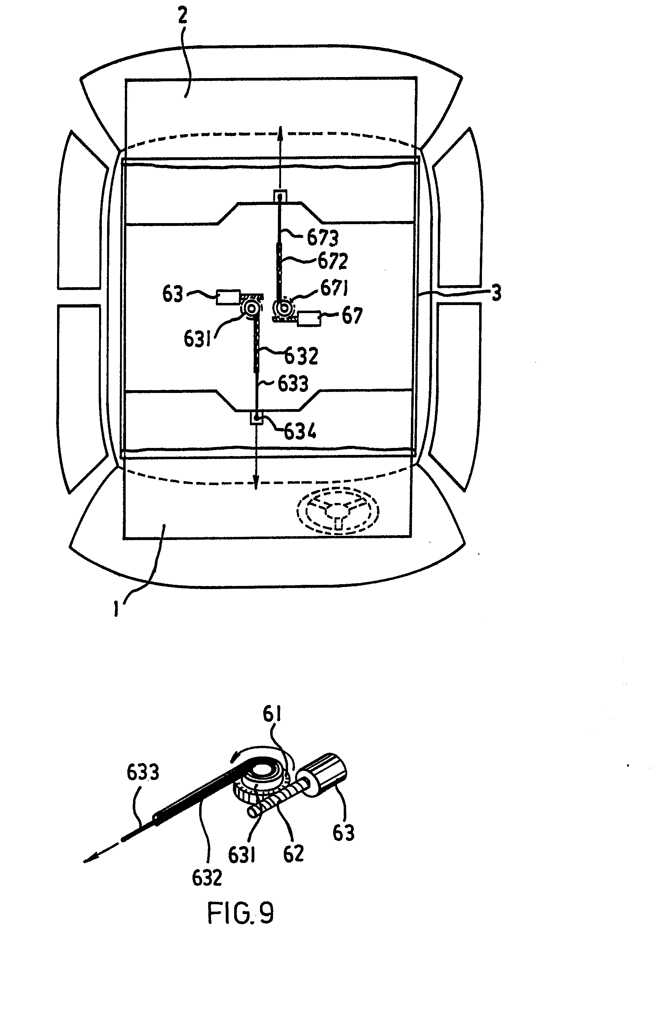

FIG. 9 illustrates a still further embodiment of the present invention. Front roof panel 1 and rear roof panel 2 are slidable in roof enclosure 3 in a manner like in the embodiment shown in FIGS.1-4, the main difference being the power actuating mechanism. In the center of the roof enclosure 3, there are mounted two reversible D.C. motors 63, 67.

Somewhat like a conventional automatic car radio antenna, the D.C. motor 63 drives a worm gear 62 and a reducing gear 61, and mounted on the reducing gear 61 there is a hollow cylinder 631. A coil of flexible nylon cord 632 is wound around inside hollow cylinder 631 with one end fixed on the inside wall of the hollow cylinder 631, while another end of nylon cord 632 makes an exit from hollow cylinder 631 through an opening at the outside rim of hollow cylinder. The exit end of nylon cord 632 is stuck in a telescopic tube 633 and tied up to the inmost tube, the inmost tube has its other end fixed on the middle of the inner side 634 of the front roof panel 1, the telescopic tube 633 laying in longitudinal direction with its outside sleeve held stationary on the frame of the D.C. motor 63.

When a two-way switch (not shown) is turned on to have the D.C. motor 63 rotate, the worm gear 62 and the reducing gear 61 and the hollow cylinder 631 will rotate accordingly, the nylon cord 632 will be unwound and extended through the exit opening to push the telescopic tube 633 to extend, thereby moving the front roof panel 1 forward and out of the roof enclosure 3.

Upon throwing the two-way switch on the other end to reverse the rotating direction of D.C. motor 63, the hollow cylinder 631 will rotate in reversed direction and wind the nylon cord 632 to retract the telescopic tube 633, which in turn moves the front roof panel 1 back into the roof enclosure 3.

Likewise, D.C. motor 67 drives a hollow cylinder 671, and nylon cord 672 to push or retract the telescopic tube 673, which in turn pushes or retracts the rear roof panel 2 out of or into the roof enclosure 3.

This embodiment enables the front roof panel 1 and rear roof panel 2 to be driven independently by separate D.C. motors.

FIG. 4 also illustrates an embodiment of the roof panel sliding mechanism. In order to reduce friction and to facilitate the roof panel motion, a roller 313 is installed at the opening end of the enclosure 3 at either side, and with front roof panel 1 suspended on roller 313. There is another roller 113 which is installed underneath the front roof panel 1 (like the one which is shown under rear roof panel 2 in FIG. 4). Therefore both roller 313, 113 will support front roof panel 1 during sliding in or out of roof enclosure 3.

As another embodiment to serve the same function of reducing friction force of roof panels movement, a low friction synthetic resin (e.g. nylon pad) can be used to replace rollers 313 and 113 mentioned above.

Likewise, the same structure can be applied to rear roof panel 2 to facilitate the panel movement.

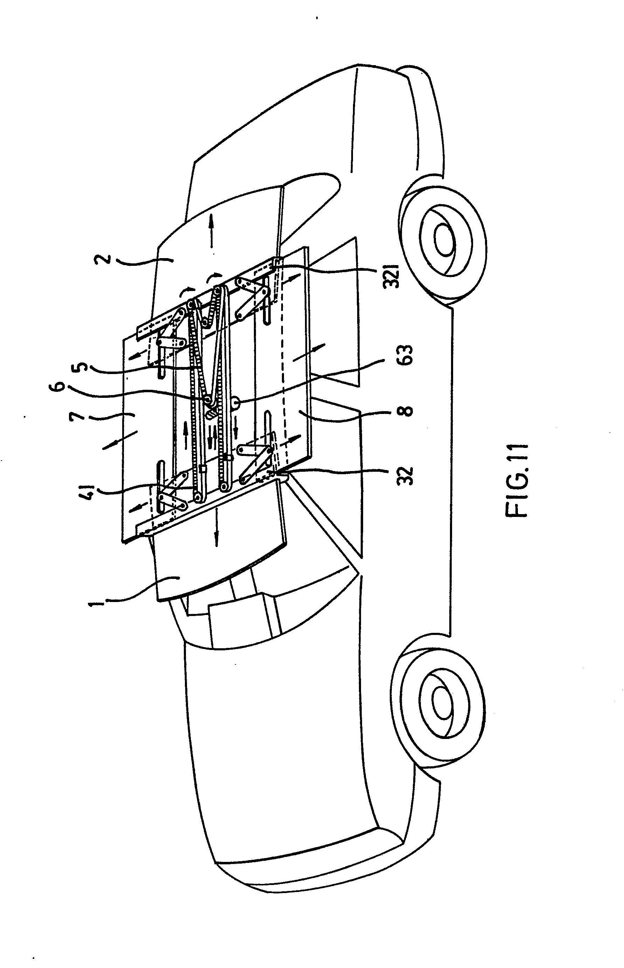

FIG. 10 illustrates a further embodiment of the roof panel sliding mechanism to facilitate low friction between the roof panels 1, 2 and the roof enclosure 3. Front roof panel 1 has a "S" curve groove 18 at each side, and is longitudinally slidable in the side frames 31 and 311.

A plurality of steel balls 191, 192 is disposed in the upper and lower "S" curve grooves 18, and sandwiched between front roof panel 1 and side frames 31 and 311 of the roof enclosure 3. Therefore, the front roof panel 1 can be slid in and out of the roof enclosure 3 with little friction. Likewise, the same structure can be applied to rear roof panel 2.

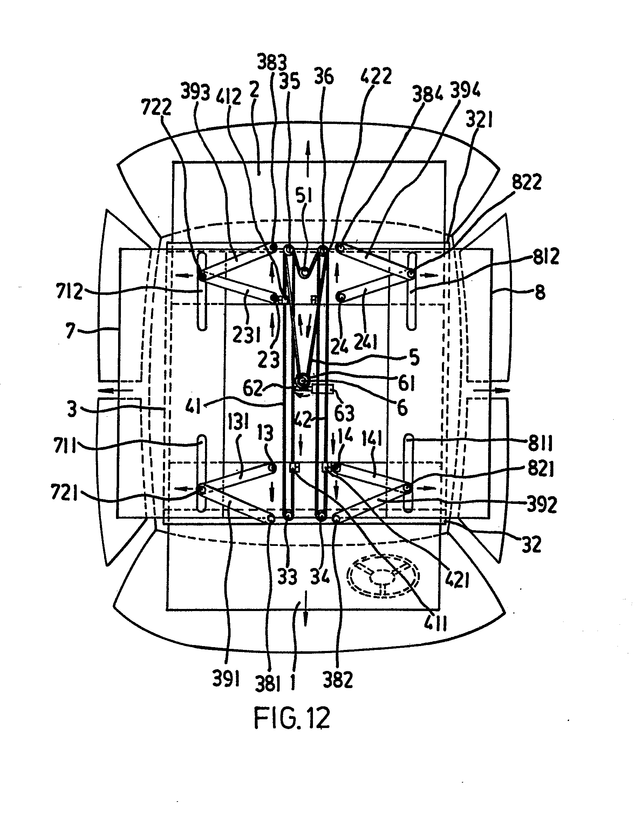

FIGS.11, 12 illustrate another embodiment of the present invention in a perspective and top view. Partially like foregoing embodiments depicted in FIGS.1-4, the front roof panel 1 and rear roof panel 2 are longitudinally slidable within roof enclosure 3. A reversible D.C. motor 63 drives a worm gear 62 and reducing gear 61, and in turn a power sprocket 6, the latter of which moves power cogged belt 5, which in turn drives two rear end sprockets 35, 36 through a tensioner 51. Thus, the two cogged belts 41, 42 will be moved at the same time, and the clamps 411, 421 thereupon will move the front roof panel 1 forward, while clamps 412, 422 will drive the rear roof panel 2 rearward.

In addition, in roof enclosure 3 there are two parallel and transversely disposed side frames 32, 321 with two side openings disposed in longitudinal direction, and the two side roof panels 7, 8, wich are sandwiched in the side frames 32, 321 and are able to slide out of roof enclosure 3 through side openings respectively.

On the inner sides of the side roof panels 7, 8, there are formed longitudinal slots 711,712, 811, 812 at both ends.

A roller pin is slidably inserted into each slot as depicted in FIG. 12 by 721, 722, 821, 822. There are two linkage bars pivotally hinged on each roller pin, for example, 391, 131 on 721. The other end 381 of linkage bar 391 is pivotally hinged on side frame 32, while the other end 13 of the linkage bar 131 is pivotally hinged on the inner side of front roof panel 1. Both linkage bars 391, 131 are hinged angularly on the roller pin 721. Likewise, the roller pin 821 has one linkage bar 392 with one end 382 thereof hinged on side frame 32 and another linkage bar 141 with another end 14 thereof hinged on front roof panel 1. Likewise, the same structure is applied to rear roof panel 2 and the side roof panels 7, 8.

When D.C. motor 63 rotates to move the front roof panel 1 and rear roof panel 2 outward concurrently, the pivots 13, 14 at front roof panel 1 will move close to the side frame 32. The linkage bar 131 will thus move close to bar 391, in a similar way, the linkage bar 141 will move close to bar 392 and the roller pins 721, 821 will then be moved outward in side direction. Likewise, roller pins 722, 822 at rear end will also be moved outward in side direction concurrently. Therefore, the side panels 7, 8 will be moved out of the roof enclosure 3, and hang over the side windows of the car to serve as sun shade or snow shield for side windows.

When the front roof panel 1 and the rear roof panel 2 are being retracted into roof enclosure 3 concurrently, both linkage bars hinged on each roller pin in each slot
will be stretched out to a larger angle, which in turn
will move roller pins inward, thereby moving the side
roof panels 7, 8 back into roof enclosure 3 for stowage.

CLAIMS:

1. An extensible roof structure for a motor vehicle, comprising a support mounted on or adapted to be mounted on the roof of the motor vehicle, two panels carried by the support for slidable movement relative thereto in a direction which in use corresponds to the longitudinal extent of the motor vehicle, and power operated means for moving the two panels from retracted positions to extended positions in which the panels project from the front and rear ends, respectively, of the support and in use over front and rear windscreens of the motor vehicle.

2. The roof structure of claim 1, wherein the support is in the form of an enclosure which houses or substantially houses the two panels when the latter are in a retracted position.

3. The roof structure of claim 1 or claim 2, wherein the power operated means comprises a motor and at least one flexible elongate element mounted about guide means and drivable by the motor.

4. The roof structure of claim 3, wherein the power operated means comprises three flexible elongate elements each mounted about respective guide mean, one of said flexible elements being drivable by the motor, while the other flexible elements are endless, extend in parallel spaced relationship between or substantially between opposite ends of the support and are drivable by the one flexible element, the two panels being connected respectively to appropriate runs of each of the other two endless elements whereby the panels are extended when the motor is driven in one direction of rotation and are retracted when the motor is driven in an opposite direction of rotation.

5. The roof structure of claim 4, wherein the endless elements are toothed belts and the guide means are sprocket wheels.

6. The roof structure of claim 4 or claim 5, wherein said other flexible elements are located adjacent to opposite sides of the support, and said one flexible element extends transversely across the support and adjacent to one end thereof.

7. The roof structure of claim 6, wherein the support has a frame section extending along each of two opposite

24

side edges, each frame section defining two channels, one above the other, which open towards the channels of the other frame section and wherein the panels are slidably mounted in the lower channels of the two frame sections and the sprocket wheels of said other flexible elements are located in the upper channels of the two frame sections.

8. The roof structure of claim 4 or claim 5, wherein said other flexible elements are located intermediate opposite sides of the support, and said one flexible element and said motor are disposed between said other flexible elements.

9. The roof structure of claim 3, wherein the power operated means comprises a single flexible elongate element mounted about respective guide means and connected to the motor to define two runs on each of two sides of the support, the two runs on each side of the support extending longitudinally of the support and being drivable by the motor in generally opposite directions, each of the two panels being connected respectively to appropriate runs of the flexible element whereby the panels are extended when the motor is driven in one direction or rotation and are retracted when the motor is driven in an opposite direction of rotation.

10. The roof structure of claim 9, wherein one run of the flexible element on each side of the support is broken intermediate its ends and where broken is connected to the motor and the broken run on the other side of the support.

11. The roof structure of claim 1 or claim 2, wherein the power operated means comprises motor means and pinions which are driven by the motor means and which are engageable with respective toothed racks on the two panels to extend and retract the panels.

12. The roof structure of claim 11, wherein there is a single motor drivably connected to two transversely extending spindles one at or adjacent to each end of the support, and wherein each spindle carries two pinions which engage with two racks on opposite sides of a respective panel.

13. The roof structure of claim 1 or claim 2, wherein the power operated means comprises two motors, one associated with each panel, and two telescopically entendible members connected to the two panels respectively and extendible and retractable by a respective motor in the longitudinal direction of the roof structure.

26

14. The roof structure of claim 13, wherein each of the telescopically extendible members comprises a plurality of telescopically extendible tubes and wherein the telescopically extendible members are connected to the two motors, respectively, by flexible elongate members, e.g. of nylon, wound at one end in a hollow cylinder drivable in rotation by the motor and connected at the other end to the tube which is most distant from the motor when the telescopically extendible member is in an extended condition.

15. The roof structure of any one of the preceding claims, wherein the motor is a reversible D.C. electric motor and has an associated reduction gear.

16. The roof structure of any one of the preceding claims, wherein guide wheels or rollers are provided between the panels and the support.

17. The roof structure of any one of claims 1-15, wherein pads of low friction material are provided betweeen the panels and the support.

18. The roof structure of any one of the preceding claims, further comprising means for releasably attaching the structure to a drain gutter of a motor vehicle roof.

19. The roof structure of any one of claims 1-17, further comprising means for releasably attaching the structure to a motor vehicle roof rack.

20. The roof structure of any one of the preceding claims, wherein two further panels are carried by the support for slidable movement relative thereto in a direction transverse to the direction of movement of the first mentioned panels and wherein means are provided for moving the two further panels from a retracted position to an extended position in which the panels project from opposite sides respectively, of the support and in use over the side windows of the motor vehicle.

21. The roof structure of claim 20, wherein the two further panels are connected to the first mentioned panels by mechanical linkages such that the further panels are extended as the first-mentioned panels are extended and vice versa.

FIG. 1

0204044

FIG. 2

FIG. 3

0204044

FIG. 4

FIG. 5

FIG. 6

FIG. 7

FIG. 8

FIG. 10

FIG.9

FIG.11

FIG. 12

## European Patent Office

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-1 155 399 (R.-L.-R. NAVET)<br><br>* figures 1-3 * | 1-3,11,15 | B 60 J 11/00 |
| Y | FR-A-1 530 981 (F. BUBBIO et al.)<br>* figure 2 * | 1-3,11 | |
| Y | DE-A-3 146 169 (L. MUCH-CHING)<br>* claim 1; figure 1 * | 1 | |
| Y | SOVIET INVENTIONS ILLUSTRATED, Section Mechanical, Week D 44, 9th December 1981, abstract no. Q12 Q15, L4145, Derwent Publications Ltd., London, GB; & SU - A - 802 096 (KUIB ORGAN ENERGY) 15-02-1981 | 1,3,15 | TECHNICAL FIELDS SEARCHED (Int. Cl.4) |
| A | US-A-3 876 245 (J.I. LOWERY)<br>* figures 1, 2 * | 20 | B 60 J 7/00<br>B 60 J 11/00 |
| A | PATENT ABSTRACTS OF JAPAN, vol. 4, no. 68 (M-12), 21st May 1980, page 50 M 12; & JP - A - 55 31682 (TATSUROU OKAMURA) 06-03-1980 | 20 | |
| D,A | US-A-3 297 356 (J.P. FRANCIS)<br>* figure 1 *<br><br>--- -/- | 1 | |

The present search report has been drawn up for all claims

| Place of search | Date of completion of the search | Examiner |
|---|---|---|
| BERLIN | 15-01-1986 | BECKER W D H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

**EUROPEAN PATENT OFFICE**

**EUROPEAN SEARCH REPORT**

| | DOCUMENTS CONSIDERED TO BE RELEVANT | | Page  2 |
|---|---|---|---|
| Category | Citation of document with indication, where appropriate, of relevant passages | Relevant to claim | CLASSIFICATION OF THE APPLICATION (Int. Cl.4) |
| D,A | US-A-3 379 467  (J.B. BRUSH) <br> * figure 1 * <br><br>--- | 1 | |
| D,A | US-A-4 229 035  (J.W. NEWMAN) <br> * figure 2 * <br><br>----- | 1 | |
| | | | TECHNICAL FIELDS SEARCHED (Int. Cl.4) |

The present search report has been drawn up for all claims

| Place of search | Date of completion of the search | Examiner |
|---|---|---|
| BERLIN | 15-01-1986 | BECKER W D H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82